# EUROPEAN PATENT APPLICATION

(11) **EP 3 081 723 A1**
(43) Date of publication of application: **19.10.2016**
(21) Application number: 16163660.0
(22) Date of filing: 04.04.2016
(51) Int. Cl.: E05B 1/00, E06B 7/28

(54) **ARRANGEMENT FOR FASTENING OBJECTS TO DOOR AND WINDOW FRAMES**

(30) Priority: 15.04.2015 FI 20150119
(71) Applicant: Lagerstedt, Pauli, 37150 Nokia (FI)
(72) Inventor: Lagerstedt, Pauli, 37150 Nokia (FI)
(74) Representative: Kolster Oy Ab

(57) **Abstract**

The invention relates to a fastening/suspension device for fastening or suspending objects or racks (3) for objects which are to be arranged in connection with a window. The fastening/suspension device comprises at least a counterpart arrangement for fastening or suspending objects or racks (3) for objects, whereby said counterpart arrangement is arrangeable in a handle recess opening (5) positioned in a window frame (1). Further, the invention comprises a fastening/suspension system.

## Description

The invention relates to a fastening/suspension device and system for fastening or suspending objects or racks for objects which are to be arranged in connection with a window. These include for instance flower racks, light fittings, curtain fastenings or decorations to be fastened or suspended. Suspension hooks to be fastened to the wall or ceiling are known from prior art for fastening or suspending objects. Typically, when these are used, there will always be traces of the hook on the wall or ceiling after the hooks or the like suspension members have been removed. It has not been common to screw hooks or hit nails into window structures for the purpose of suspending objects.

In the present invention, a fastening/suspension device has been surprisingly provided which does not leave traces after it has been taken out of use. The fastening/suspension device according to the invention is characterized in that the fastening/suspension device comprises at least a counterpart arrangement for fastening or suspending objects or racks for objects, whereby said counterpart arrangement is arrangeable in a handle recess opening positioned in a window frame.

An advantage of the invention is that a large variety of objects or racks for them can be fastened in connection with a window in an easy manner without breaking or changing any structure. A device according to the invention can always be removed, and there will be no visible trace after the removal. If separate counterpart arrangements are used to which a desired object or rack is separately attached, the system becomes versatile as all possible objects and racks to be attached can be fastened to a single counterpart of a particular type, for example.

Alternatively, the counterpart arrangement may be a fixed structure integral with the object or rack.

In the following, the invention will be explained in closer detail with reference to the accompanying drawing, in which
Figure 1 shows a simple rack fastened to a window frame.
Figure 2 shows a handle recess in the window frame.
Figure 3 shows a counterpart arrangement for a fastening/suspension device, to be arranged and locked in an opening of a handle recess.
Figures 4a and 4b show a second counterpart arrangement and its cross-section.
Figures 5a and 5b show yet another counterpart arrangement and its cross-section.
Figure 6 shows a fastening/suspension arrangement to be arranged in two handle recess openings of a window.
Figure 7 shows a second fastening/suspension arrangement to be arranged in two handle recess openings of a window.

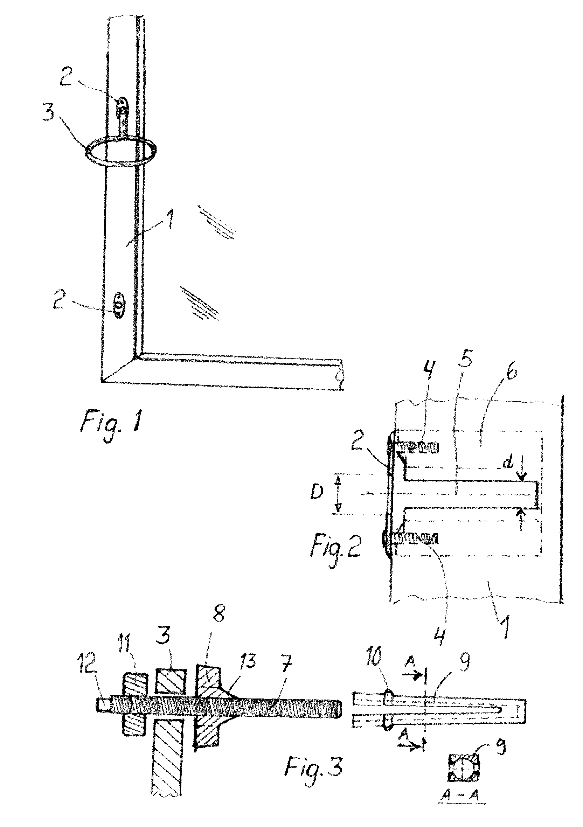

Figure 1 shows a conventional window frame 1 comprising a plurality of handle recesses and covers 2 for them. The cover 2 comprises a hole in which, in this case, a separate handle is positioned to lock and open the window by turning the handle. Instead of a handle, a device according to the invention is positioned in the upper handle opening in the frame 1, the device comprising a ringshaped rack 3. A plant pot of an appropriate size which will not drop through the ring is positionable on the rack 3.

Figure 2 shows a side view of a handle recess. The handle recess comprises a handle recess opening 5, which is a square opening and into which the square turning head of the handle is inserted. The cover 2 is fastened by means of screws 4 to cover the handle opening and the handle recess part. The cover 2 comprises a hole for inserting the handle, the diameter D of the hole being larger than the side dimension d of the handle recess opening 5. The square handle recess opening 5 turns in the recess in a manner known as such when the handle is being turned, moving the locking mechanism of the frame 1 to lock the window to the frame part and to open it from the frame part.

Figure 3 shows an example of what kind of a counterpart arrangement is arrangeable in the handle recess opening 5 in such a way that it also locks in it. In this case, the counterpart arrangement is a separate part, and a desired object or rack is attached to it by a particular fastening manner. The counterpart arrangement comprises an anchoring sleeve 9, which is, most suitably, of plastic and it is insertable into the handle recess opening 5. The anchoring sleeve 9 is partly open in the longitudinal direction, opening up to have a larger diameter when a screw 7 is pushed or screwed into it. The anchoring sleeve 9 presses, by the effect of the screw 7, against the inner surface of the handle recess opening 5.

When the anchoring sleeve 9 is to be prevented from getting out of the opening, its outer surface is provided with protrusions 10 which, when the sleeve opens, become positioned on the backside of the cover 2, thus preventing the sleeve from getting out of the opening.

When the screw 7 is screwed sufficiently into the anchoring sleeve 9, a nut 8 upon the screw 7 is turned towards the sleeve to the extent that a conical part 13 in the nut 8 wedges in from the end of the sleeve and, in addition, widens the end of the sleeve as an ensuring measure. This further contributes to preventing the arrangement from rolling in the handle recess opening 5 as the anchoring is also supported against the non-rotary part, i.e. cover 2.

Figure 3 shows yet another example of how a rack 3 according to Figure 1, for example, can be fastened such that it is supported on the metal screw 7. The end of the rack 3 that is provided with a hole is tightened between a tightening nut 11 and the nut 8. The nuts 11 and 8 may be of plastic and turnable by fingers, in which case their outer edge have shapes which facilitate the turning, and also the outer diameters may be larger than in conventional nuts. If the objects and racks to be fastened comprise, according to Figure 3, a part similar to the one in rack 3, i.e. a hole through which the screw 7 goes, then the counterpart arrangement 7, 8, 11 is a general model for suspending objects and racks to be fastened.

In an alternative structure, for instance the screw 7 or the like pin is a standard part in the object or rack to be fastened, and so is the anchoring sleeve 9. Such an object/rack is then always fastened directly to the handle recess opening 5.

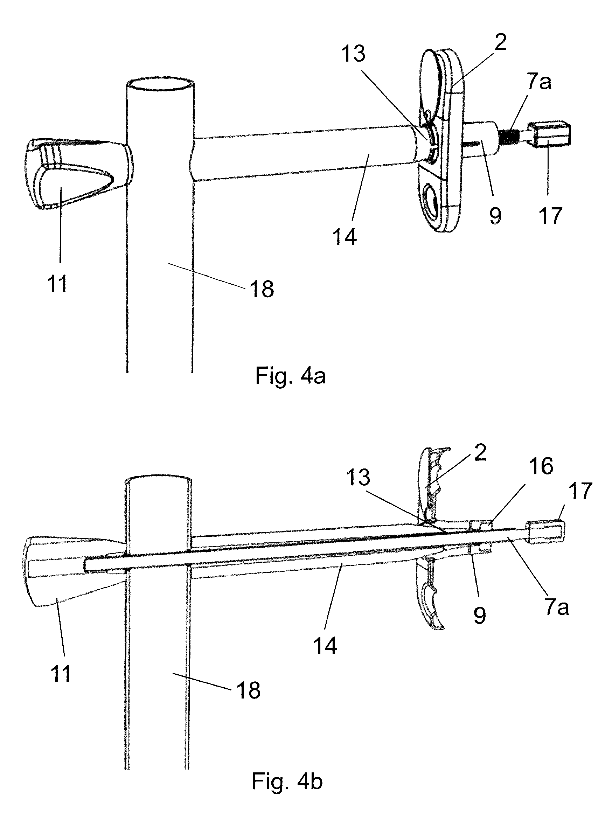

Figure 4a shows a counterpart arrangement for a fastening/suspension device as being pushed through the hole of the cover 2. The counterpart arrangement comprises a screw 7a to be arranged in the handle recess opening 5. The screw 7a may comprise a square turning head 17 which may be arranged in the square handle recess opening 5 to allow a window to be locked and opened. The square-shaped turning head 17 also facilitates, as such, the fastening of the counterpart arrangement to the handle recess opening 5. The counterpart arrangement also comprises a sleeve 14 to be arranged around the screw 7a, and a tightening part, such as a tightening nut 11. Further, the counterpart arrangement comprises an anchoring sleeve 9 arrangeable to press at least partially against the inner surface of the handle recess opening 5. Figure 4 also shows a bar 18 which can be attached between the tightening nut 11 and the sleeve 14 such that it is supported on the screw 7a to suspend objects. In one embodiment, the screw 7a is without a turning head 17, whereby the screw 7a is fastened to the handle recess opening 5 solely by means of the anchoring sleeve 9.

Figure 4b shows a cross-section of Figure 4a, from which it can be seen that the screw 7a has been pushed, together with the anchoring sleeve 9, through the hole of the cover 2. The conical part 13 in the sleeve 14 wedges into the anchoring sleeve 9, widening the end of the anchoring sleeve 9, whereby the counterpart arrangement is tightly fastened to the handle recess opening. When the counterpart arrangement has been fastened to the handle recess opening 5, an object, such as a bar 18, can be fastened to be supported on the screw 7a. The bar 18 is tightened to the sleeve 14 by means of the tightening nut 11.

In an embodiment, the anchoring sleeve 9 comprises, on its outer surface, protrusions 10 which, being larger than the hole diameter D of the cover 2 of the handle recess opening, are positioned behind the hole of the cover, and which prevent the anchoring sleeve 9 from getting out of the handle recess opening 5 when the anchoring sleeve 9 has been, in a manner known as such, expanded to the handle recess opening 5. In Figures 4a and 4b, the cross-section 9 of the anchoring sleeve is round but it may also be at least partially square. The counterpart arrangement may further comprise an adjustment nut 16, as seen in Figure 4b, to fasten the anchoring sleeve 9 in place to the screw 7a.

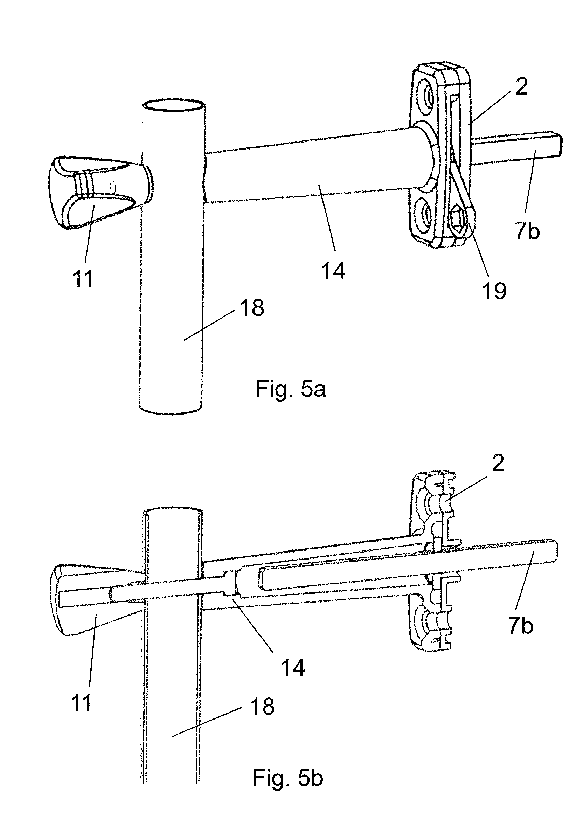

Figure 5a shows a second counterpart arrangement for a fastening/suspension device. The counterpart arrangement comprises a bar 7b which is to be arranged in the handle recess opening 5 and has a square-shaped diameter, whereby the bar can be arranged in the square handle recess opening 5 to allow a window to be locked and opened. The square bar 7 also facilitates fastening to the handle recess opening 5, whereby no anchoring sleeve 9 is needed. The counterpart arrangement also comprises a sleeve 14 to be arranged around the bar 7b, and a tightening part, such as a tightening nut 11. The counterpart arrangement may further comprise a cover 2 to fasten the counterpart arrangement to the window frame 1 by means of screws, for example. The cover 2 may comprise a handle 19 which, when turned, allows the window to be opened or locked. In an embodiment, the handle 19 can be fixedly or detachably attached to the tightening part, screw 7, 7a, bar 7b or cover 2. Figure 5a also shows a bar 18 which can be fastened between the tightening nut 11 and the sleeve 14.

Figure 5b shows a cross-section of Figure 5a, from which it can be seen that the bar 7b has been pushed through the hole of the cover 2. When the counterpart arrangement has been firmly fastened to the handle recess opening 5, an object, such as a bar 18, can be fastened to be supported on the screw or bar fastened to the sleeve 14. The bar 18 is tightened up tightly to the sleeve 14 by means of the tightening part or tightening nut 11.

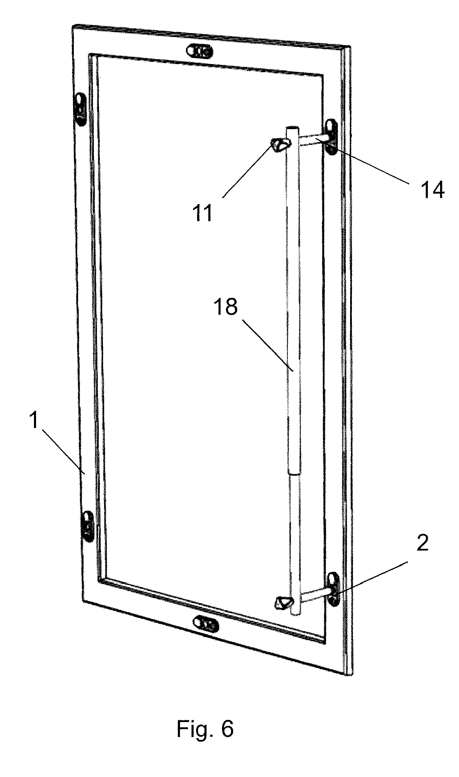

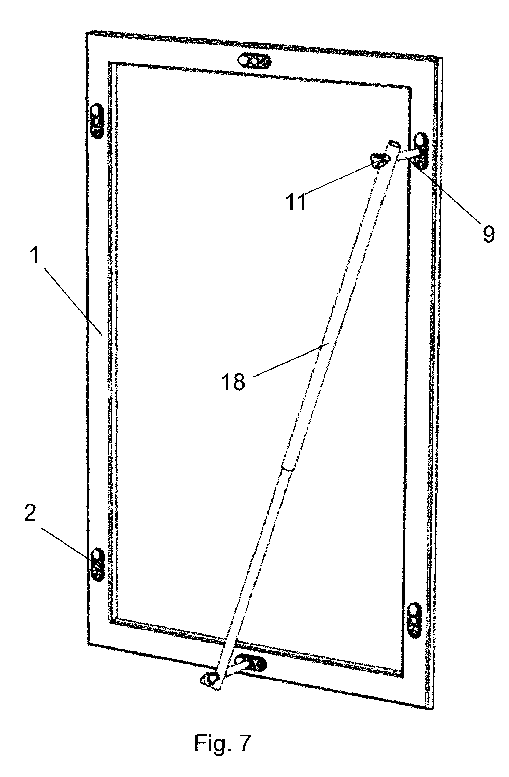

Figure 6 shows a fastening/suspension system comprising at least two fastening/suspension devices according to the above. The counterpart arrangements for the fastening/suspension devices are arranged in two handle recess openings 5 positioned in the window frame 1. Further, these counterpart arrangements are connected to each other by means of the bar 18. The bar 18 may be telescopic, its length being adjustable. In such a case, the position of the bar 18 in the window frame 1 may be varied. Figure 7 shows a system according to Figure 6, where the lower counterpart arrangement has been moved into the handle recess opening in the lower part of the window frame 1.

In an embodiment, the counterpart arrangements for a fastening/suspension system are arrangeable in at least two handle recess openings 5 positioned in at least one window frame 1, said counterpart arrangements being connectable to each other with at least one bar 18. At least one object or rack 3 for it can be fastened to the counterpart arrangements or bar 18. In an embodiment, the fastening/suspension arrangement may form a tree-like structure comprising several bars as well as objects and racks 3 positioned on them. The objects and racks 3 may also be fastened to the bar in such a way that they can be turned into different positions relative to the bar.

It is apparent to a person skilled in the art that as technology advances, the basic idea of the invention may be implemented in many different ways. The invention and its embodiments are thus not restricted to the examples described above but may vary within the scope of the claims.

## Claims

1. A fastening/suspension device for fastening or suspending objects or racks (3) for objects which are to be arranged in connection with a window, **characterized in that** the fastening/suspension device comprises at least a counterpart arrangement for fastening or suspending objects or racks (3) for objects, whereby said counterpart arrangement is arrangeable in a handle recess opening (5) positioned in a window frame (1).

2. A fastening/suspension device according to claim 1, **characterized in that** the counterpart arrangement comprises a screw (7, 7a) or a bar (7b) to be arranged in the handle recess opening (5), and a tightening part for fastening an object or rack (3) in the counterpart arrangement.

3. A fastening/suspension device according to claim 2, **characterized in that** the counterpart arrangement comprises a nut (8) or a sleeve (14) to be arranged around the screw (7, 7a) or bar for fastening an object or rack (3) between the tightening part and the nut (8) or sleeve (14).

4. A fastening/suspension device according to claim 2 or 3, **characterized in that** the counterpart arrangement further comprises an anchoring sleeve (9) arrangeable around the screw (7, 7a) in the handle recess opening (5).

5. A fastening/suspension device according to claim 4, **characterized in that** the anchoring sleeve (9) is arrangeable to press at least partially against the inner surface of the handle recess opening (5).

6. A fastening/suspension device according to claim 4 or 5, **characterized in that** the anchoring sleeve (9) comprises, on its outer surface, protrusions (10) which, being larger than the hole diameter D of the cover (2) of the handle recess opening, are positioned behind the hole of the cover, and which prevent the anchoring sleeve (9) from getting out of the handle recess opening (5) when the anchoring sleeve (9) has been, in a manner known as such, expanded to the handle recess opening (5).

7. A fastening/suspension device according to any one of claims 4 to 6, **characterized in that** the cross-section of the anchoring sleeve (9) is at least partially square.

8. A fastening/suspension device according to any one of claims 4 to 7, **characterized in that** the nut (8) or sleeve (14) comprises a conical part (13) arrangeable to wedge into the anchoring sleeve (9) in the handle recess opening (5).

9. A fastening/suspension device according to any one of claims 4 to 8, **characterized in that** the counterpart arrangement further comprises an adjustment nut (16) for fastening the anchoring sleeve (9) in place to the screw (7, 7a).

10. A fastening/suspension device according to any one of claims 2 to 9, **characterized in that** the screw (7, 7a) or bar (7b) comprises a turning head (17) having a square diameter and being arrangeable in the square handle recess opening (5).

11. A fastening/suspension device according to claim 10, **characterized in that** the counterpart arrangement further comprises a cover (2) for fastening the counterpart arrangement to the window frame (1).

12. A fastening/suspension device according to claim 10 or 11, **characterized in that** the counterpart arrangement further comprises a handle (19) fixedly or detachably fastened to the tightening part, screw (7, 7a), bar (7b) or cover (2) to open or lock a window.

13. A fastening/suspension device according to any one of the preceding claims, **characterized in that** the fastening/suspension device comprises a counterpart arrangement fixedly attached to said object or rack (3) for an object.

14. A fastening/suspension system, **characterized in that** the fastening/suspension device comprises at least two fastening/suspension devices according to any one of claims 1 to 13, the counterpart arrangements of which are arrangeable in at least two handle recess openings (5) positioned in at least one window frame (1), said counterpart arrangements being connectable to each other with at least one bar (18).

15. A fastening/suspension system according to claim 14, **characterized in that** the length of at least one bar (18) is adjustable.
